# EUROPÄISCHE PATENTSCHRIFT

(11) **EP 1 166 992 B1**
(45) Veröffentlichungstag und Bekanntmachung des Hinweises auf die Patenterteilung: **27.10.2004**
(21) Anmeldenummer: 01114510.9
(22) Anmeldetag: 15.06.2001
(51) Int. Cl.: B29C 45/16

(54) **Werkzeug zum Mehrkomponentenspritzgiessen von Kunststoff-Zahnbürstenkörpern für Zahnbürsten**
Mould for multicomponent injection moulding of plastic toothbrush bodies for toothbrushes
Moule pour mouler par injection à composants multiples des corps de brosse à dents en matière plastique pour brosses à dents

(30) Priorität: 20.06.2000 DE 10030246
(43) Veröffentlichungstag der Anmeldung: 02.01.2002
(73) Patentinhaber: Braun Formenbau GmbH, 79353 Bahlingen (DE)
(72) Erfinder: Bühler, Klaus, 79353 Bahlingen (DE)
(74) Vertreter: Goy, Wolfgang, Dipl.-Phys.

(56) Entgegenhaltungen:
- EP-A- 0 504 571
- DE-A- 4 417 986
- DE-A- 19 722 366
- PATENT ABSTRACTS OF JAPAN vol. 10, no. 181 (M-492), 25. Juni 1986 (1986-06-25) & JP 61 029516 A (NISSEI PLASTICS IND CO), 10. Februar 1986 (1986-02-10)

## Beschreibung

Die Erfindung betrifft ein Werkzeug zum Mehrkomponentenspritzgießen von Kunststoff-Zahnbürstenkörpern für Zahnbürsten nach dem Oberbegriff des Anspruchs 1.

Es wird dabei im folgenden davon ausgegangen, daß mit dem Werkzeug nicht nur ein einziger Zahnbürstenkörper jeweils gespritzt wird, sondern daß es sich um ein Werkzeug handelt, mit dem gleichzeitig mehrere Zahnbürstenkörper gespritzt werden können.

Zum Spritzen von aus mehreren Kunststoffkomponenten bestehenden Zahnbürstenkörpern muß der zunächst gespritzte Vorspritzling in einen weiteren Formenhohlraum übergeführt werden, wo weitere Komponenten insbesondere im Bereich des Stieles gespritzt werden können. Um den Vorspritzling der ersten Komponente in den Formenhohlraum für die zweite Komponente umzusetzen, gibt es sogenannte Wendewerkzeuge. Darunter ist zu verstehen, daß sich in der einen Werkzeughälfte ein sogenanntes Wendeteil befindet, welches nach dem Spritzen der ersten Komponente um 180° zum Spritzen der zweiten Komponente gedreht wird, wobei dieses Wendeteil den Vorspritzling während der Drehbewegung hält. Der Nachteil besteht darin, daß diese zusätzliche Umsetzeinrichtung in Form eines Wendeteils den Formenhohlraum zum Spritzen der ersten Komponente mit begrenzt. Sofern die Begrenzungslinie im Bereich des Kopfes des zu spritzenden Zahnbürstenkörpers liegt, kann dort ein überstehender Grat entstehen, welcher insbesondere in diesem Kopfbereich des Zahnbürstenkörpers unerwünscht ist, weil die Person, welche sich mit einer derartigen Zahnbürste die Zähne putzt, diesen Grat im Mund spüren und sich im Extremfall sogar daran verletzen kann.

Die DE-A-44 17 986 zeigt eine Bürstenherstellungsmaschine mit einer Spritzgußform der eingangs angegebenen Art, welche eine auswerferseitige, bewegliche Formplatte und eine feststehende, düsenseitige Formplatte aufweist. Die bewegliche Formplatte läßt sich zwischen einer Offenstellung und einer Schließstellung der Spritzgußform hin- und herbewegen. Zum Umsetzen der Vorspritzlinge in die Formnester zum Spritzen der zweiten Komponente dient eine Transporteinrichtung mit einer brückenartigen, querverlaufenden Traverse. Diese ist durch neben den Formplatten angeordnete Schiebeführungen in Form von Schiebestangen längsverschiebbar. Für eine Hubbewegung der Quertraverse dienen Hubzylinder, vorzugsweise Druckluftzylinder. - Der Nachteil bei dieser bekannten Bürstenherstellungsmaschine besteht in der Führung für die Umsetzeinrichtung mit der brückenartigen Quertraverse. So ist es notwendig, die Formplatten seitlich mit Schiebeführungen zu versehen. Da diese auskragend an Streben angeordnet sind, kann sich hier im Laufe der Zeit eine Ungenauigkeit und Instabilität ergeben. Außerdem ist es schwierig, zum Abheben der Quertraverse entsprechende Hubzylinder zu integrieren.

Davon ausgehend liegt der Erfindung die **Aufgabe** zugrunde, ein Werkzeug zum Mehrkomponenten-Spritzgießen von Kunststoff-Zahnbürstenkörpern für Zahnbürsten der zuvor angegebenen Art mit einer verbesserten Führung für die Umsetzeinrichtung zu schaffen.

Die technische **Lösung** ist gekennzeichnet durch die Merkmale des Anspruchs 1.

Dadurch ist ein Werkzeug zum Mehrkomponenten-Spritzgießen von Kunststoff-Zahnbürstenkörpern für Zahnbürsten mit einer verbesserten Führung für die Umsetzeinrichtung geschaffen. Erfindungsgemäß wird dabei eine im Querschnitt T- oder L-förmige Führung für diese Umsetzeinrichtung verwendet. Zunächst dient diese, hinsichtlich ihres Querschnitts speziell ausgebildete Führung der Längsverfahrbarkeit der Umsetzeinrichtung zum Überführen der Vorspritzlinge in den Bereich der Formenhohlräume zum Spritzen einer weiteren Komponente. Diese im Querschnitt T- oder L-förmige Führung dient jedoch nicht nur der Längsführung für die Umsetzeinrichtung, sondern sie dient auch als Führung zum Abheben der Umsetzeinrichtung von der ihr zugeordneten Werkzeughälfte. Die Führung erfüllt somit eine Doppelfunktion. Darüber hinaus ist schließlich noch der Querbalken des "T" oder des "L" für die Begrenzung der Hubhöhe beim Abheben der Umsetzeinrichtung verantwortlich, d. h. es sind keine zusätzlichen Begrenzungselemente notwendig. Zum Heben und Senken der Umsetzeinrichtung kann ein pneumatischer Kurzhubzylinder dienen.

Die Weiterbildung gemäß Anspruch 2 schlägt ein Verfahren sowie eine konstruktive Anordnung vor, um den Vorspritzling auf optimale Weise zunächst aus seiner Kavität abzuheben, um ihn dann in die zweite Kavität überzuführen. Der Grundgedanke besteht dabei darin, daß die Umsetzeinrichtung den Vorspritzling von oben her greift und ihn somit aus seiner Kavität heraushebt, wobei eine Unterstützung der Aushebbewegung durch Werkzeugauswerfer erfolgen kann, um die notwendige Kraft zum Herausheben aufzubringen.

Die Weiterbildung gemäß Anspruch 3 hat den Vorteil, daß auf technisch einfach Weise der Vorspritzling aus seiner Kavität entnommen werden kann, indem durch Ansaugen des Vorspritzlings an die Umsetzeinrichtung eine Kraft erzeugt wird, welche groß genug ist, um die Haltekraft des Vorspritzlings in seiner Kavität zu überwinden, wobei auch hier eine Unterstützung der Aushebbewegung durch Werkzeugauswerfer erfolgen kann, um die notwendige Kraft zum Herausheben aufzubringen.

Die Weiterbildung gemäß Anspruch 4 setzt an dem Punkt an, daß der Vorspritzling zum Spritzen der weiteren Komponente von der Umsetzeinrichtung gehalten wird und somit die Kavität dieser Umsetzeinrichtung eine Teilkavität des Formenhohlraums zum Spritzen der zweiten Komponente darstellt. Dies bedeutet aber nur, daß die Umsetzeinrichung die Kavität zur Aufnahme des Vorspritzlings definiert, daß aber außerhalb des Bereiches der Umsetzeinrichtung zwischen dem Vorspritzling und den beiden Werkzeughälften zusätzliche Kavitäten existieren, in die hinein die zweite Komponente gespritzt wird. In die Umsetzeinrichtung wird somit kein Kunststoff gespritzt, d.h. die Umsetzeinrichtung kommt mit dem eingespritzten Kunststoff nicht in Berührung. Sie dient nur als Negativkavität der schon gespritzten Formenelemente.

Die Weiterbildung gemäß Anspruch 5 schafft eine Möglichkeit, mittels welcher der fertig gespritzte Zahnbürstenkörper innerhalb seiner Kavität gehalten werden kann, wenn zum "Abholen" eines neuen Vorspritzlings die Umsetzeinrichtung ausgefahren wird. Somit werden die Fertigspritzlinge durch Vakuum in der Fertigspritzkavität gehalten, wobei die Vakuumsaugnäpfe vorzugsweise - ebenfalls - am Kopf des Zahnbürstenkörpers angreifen. Demgemäß kann der Formeinsatz im Kopfbereich mit entsprechenden Vakuumsaugnäpfen bestückt sein.

Eine erste Variante in der Anordnung der Zahnbürstenkörper schlagen die Ansprüche 6 und 7 vor. Dabei sind die Köpfe der Zahnbürstenkörper hin zu Mitte gerichtet, weil sich dort die Umsetzeinrichtung befindet und diese Umsetzeinrichtung für den Umsetzvorgang die Vorspritzlinge in deren Kopfbereich greift.

Eine zweite Variante schlägt Anspruch 8 vor, bei welcher die Zahnbürstenkörper in Verfahrrichtung der Umsetzeinrichtung ausgerichtet sind.

In der Minimalausrüstung des Werkzeugs können zwei Komponenten gespritzt werden. Selbstverständlich ist es auch denkbar, den Zahnbürstenkörper mit mehr als zwei Komponenten zu spritzen. In diesem Fall schlägt die Weiterbildung gemäß Anspruch 9 vor, daß mehrere Stationen zum Spritzen von mehr als zwei Komponenten durch die Umsetzeinrichtung anfahrbar sind.

Zwei Ausführungsbeispiele eines Werkzeugs zum Mehrkomponentenspritzgießen von Kunststoff-Zahnbürstenkörpern für Zahnbürsten werden nachfolgend anhand der Zeichnungen beschrieben. In diesen zeigt:
- Fig. 1 a bis 1 h: eine erste Ausführungsform des Werkzeugs jeweils in einer Draufsicht sowie mit einer Querschnittsdarstellung mit dem Ablauf der Verfahrensschritte;
- Fig. 2 a bis 2 h: eine zweite Ausführungsform des Werkzeugs jeweils in einer Draufsicht sowie mit einer Querschnittsdarstellung und einer Längsschnittdarstellung mit dem Ablauf der Verfahrensschritte.

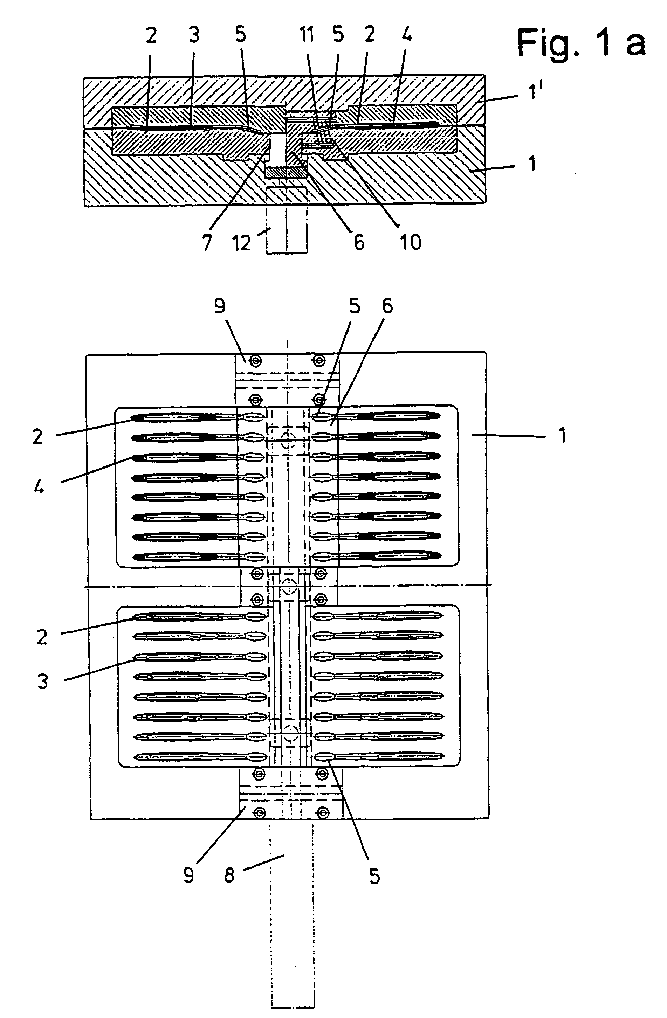

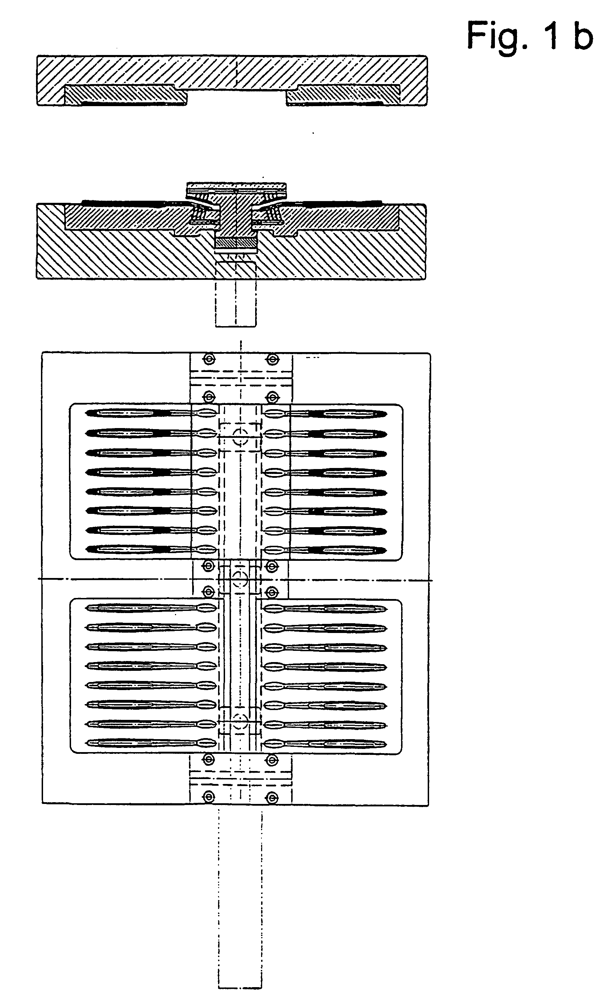

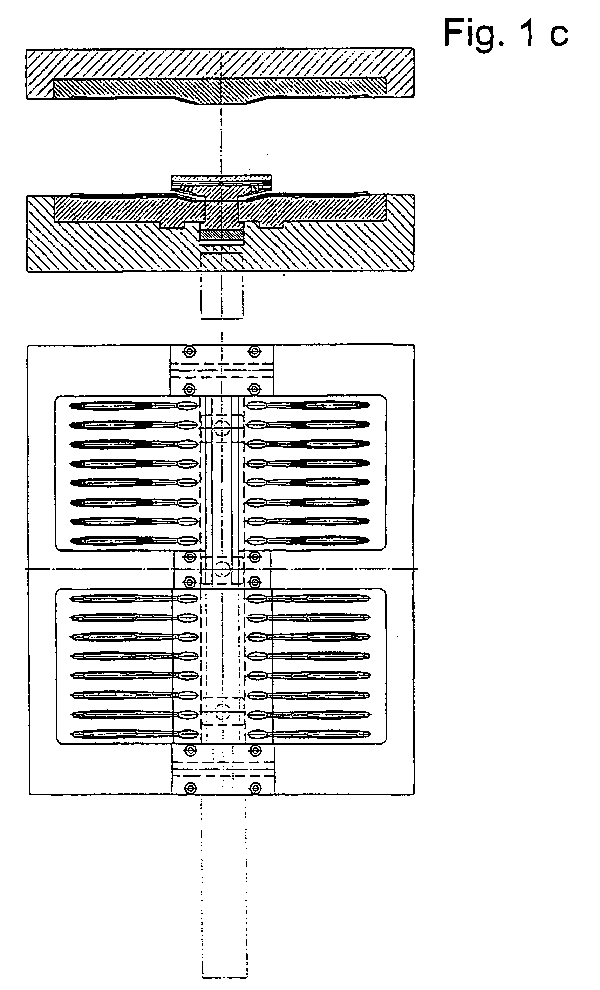

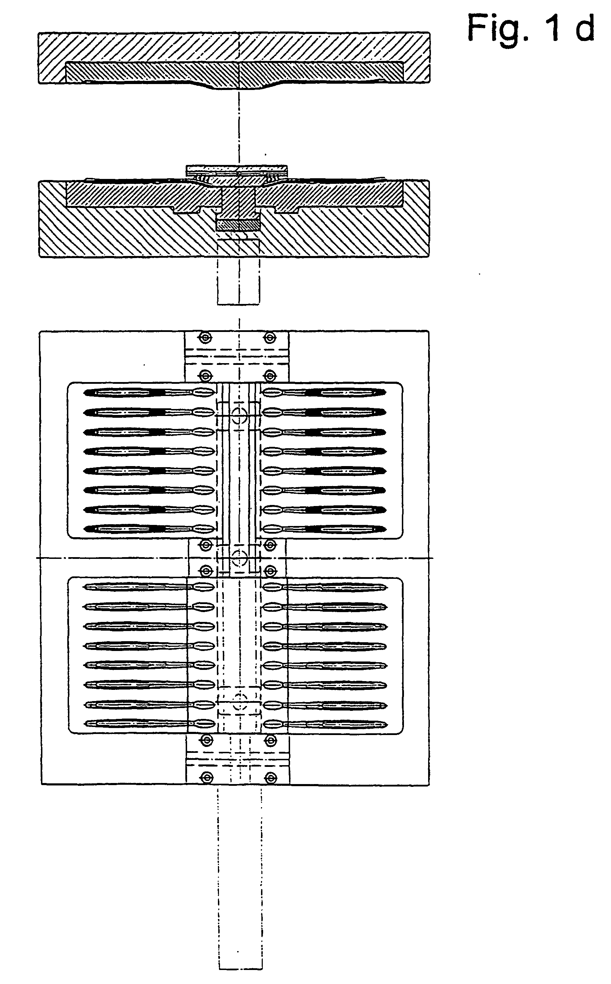

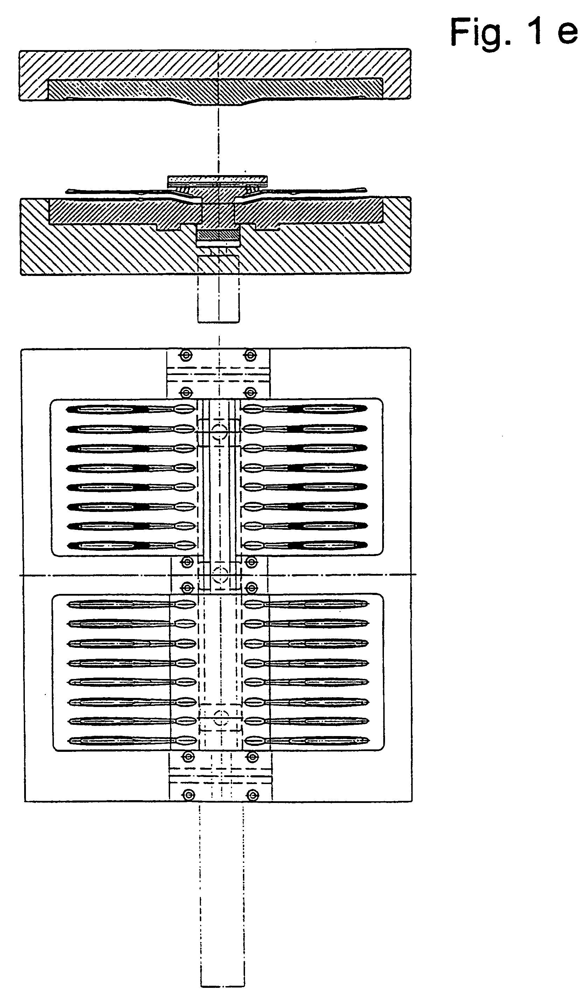

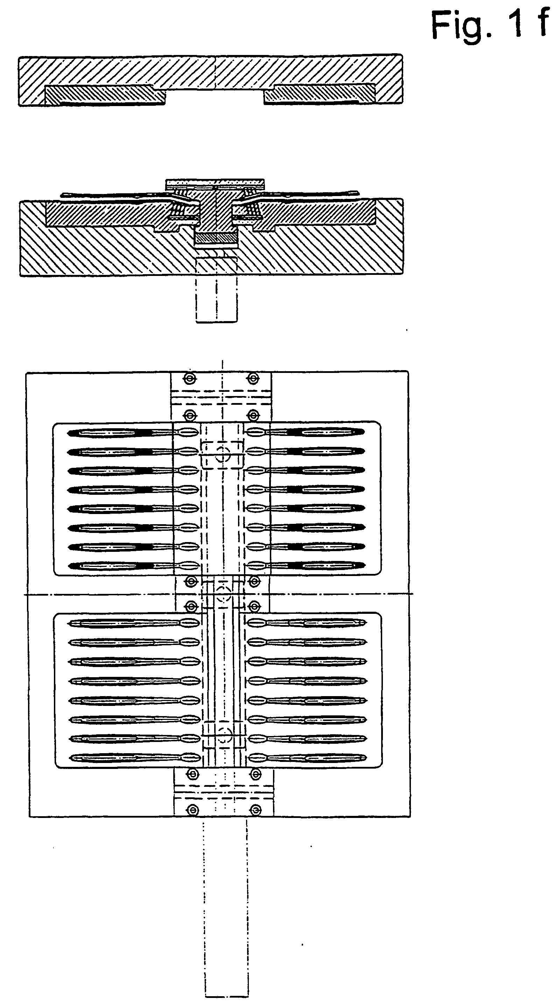

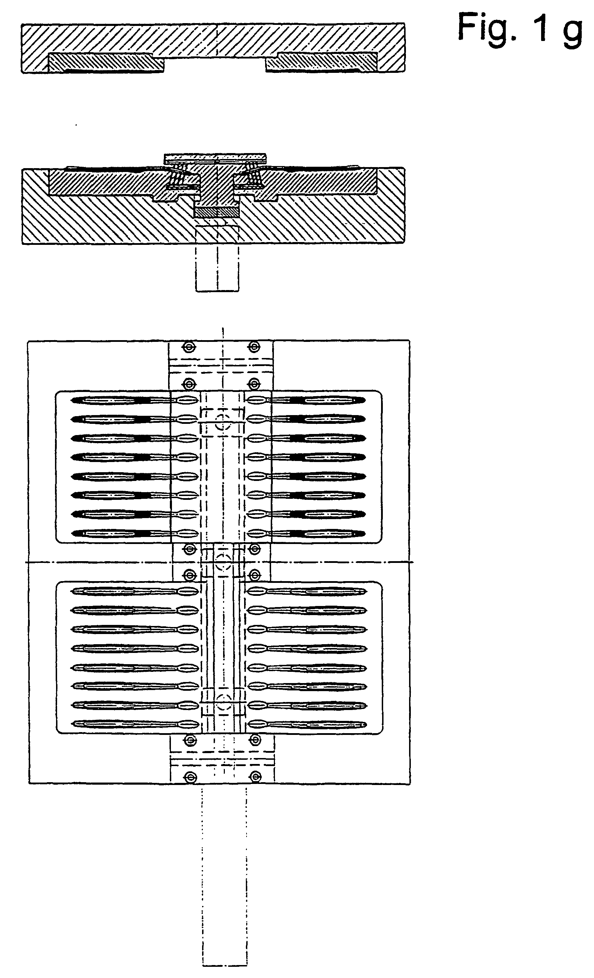

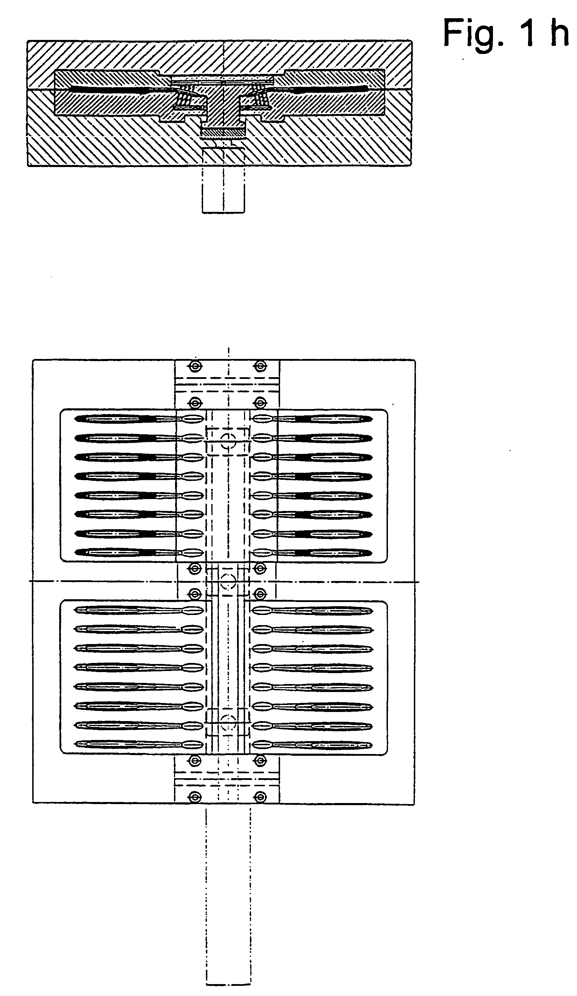

Das Werkzeug der ersten Ausführungsform der Fig. 1 a bis 1 h weist zwei Werkzeughälften 1,1' auf, welche voneinander weg und aufeinander zu bewegbar sind. Diese Werkzeughälften 1,1' definieren zwischen sich Formenhohlräume 2 zum Spritzen zunächst einer ersten Komponente und anschließend zum Spritzen einer zweiten Komponente. Die Formenhohlräume 2 sind dabei derart ausgebildet, daß die zu spritzenden Vorspritzlinge 3 bzw. fertig gespritzten Zahnbürstenkörper 4 quer zur Längsmittellinie des Werkzeugs ausgerichtet sind und dabei mit ihren Köpfen 5 aufeinander zu gerichtet sind.

In der einen Werkzeughälfte 1 befindet sich eine linear verschiebbare Umsetzeinrichtung 6. Zu diesem Zweck weist die Werkzeughälfte 1 eine im Querschnitt T-förmige Führung 7 auf, längs der die Umsetzeinrichtung 6 mittels eines Pneumatikzylinders 8 mit beidseitiger Endlagendämfung verschiebbar ist, wobei die Werkzeughälfte 1 zusätzlich endseitig jeweils mit einem Festanschlag 9 ausgestattet ist.

Im Bereich der Köpfe 5 weisen die Formenhohlräume 2, welche den fertig gespritzten Zahnbürstenkörpem 4 zugeordnet sind, Vakuumsaugnäpfe 10 auf. Die Umsetzeinrichung 6 weist ebenfalls Vakuumsaugnäpfe 11 auf.

Die Funktionsweise des Werkzeugs zum Zweikomponentenspritzgießen von Zahnbürstenkörpern 4 soll anhand des Verfahrensablaufs der Fig. 1 a bis 1 h nachfolgend beschrieben werden:

In Fig. 1 a ist die Ausgangsstellung dargestellt. Im unteren Bereich befinden sich die Formenhohlräume 2 für die Vorspritzlinge 3 und im oberen Bereich die Fertigspritzlinge, also die bereits fertigen Zahnbürstenkörper 4. Dies soll das Ergebnis eines vorhergehenden Spritzzyklusses sein.

Zu Beginn eines neuen Zyklusses werden in Fig. 1 b die beiden Werkzeughälften 1,1' auseinandergefahren und damit das Werkzeug geöffnet. Die Umsetzeinrichtung 6 befindet sich - nach wie vor - im Bereich der Zahnbürstenkörper 4, also in der (unteren) Zeichnung oben. Die Umsetzeinrichung 6 wird mittels eines pneumatischen Kurzhubzylinders 12 entsprechend des Hubes in der T-förmigen Führung 7 ausgefahren. Gehalten werden die Zahnbürstenkörper 4 durch Betätigung der Vakuumsaugnäpfe 10.

Im nächsten Verfahrensschritt gemäß Fig. 1 c fährt die Umsetzeinrichtung 6 mittels des Pneumatikzylinders 8 in die Position der Vorspritzlinge 3, also in der (unteren) Zeichnung nach unten. Parallel hierzu können die fertig gespritzten Zahnbürstenkörper 4 über ein extemes Handling entnommen werden.

Im weiteren Verfahrensschritt gemäß Fig. 1 d wird die Umsetzeinrichtung 6 in der Vorspritzstation abgesenkt. Die dort befindlichen Vorspritzlinge 3 werden mittels der Vakuumsaugnäpfe 11 angesaugt. Die - nicht dargestellten - Lochfeldstifte im Bereich des späteren Borstenfeldes des Zahnbürstenkörpers 4 werden hydraulisch gezogen.

Anschließend werden gemäß Fig. 1 e die Vorspritzlinge 3 ihren Formenhohlräumen 2 dadurch entnommen, daß die Umsetzeinrichtung 6 mittels des pneumatischen Kurzhubzylinders 2 wieder ausgefahren wird. Dabei kann eine zusätzliche Auswerferunterstützung wegen der Entformkräfte der Vorspritzlinge 3 aus ihren Formenhohlräumen 2 vorgesehen sein.

Im weiteren Verfahrensschritt gemäß Fig. 1 f fährt die Umsetzeinrichtung 6 in Richtung Formenhohlräume 2 zum Spritzen der zweiten Komponente zur endgültigen Herstellung der Zahnbürstenkörper 4. Nach dem Verfahren der Umsetzeinrichtung 6 (in der Zeichnung) nach oben, wird die Umsetzeinrichtung 6 wieder abgesenkt, so daß die Vorspritzlinge 3 in den entsprechenden Formenhohlräumen 2 dieser zweiten Station zu liegen kommen. Dabei begrenzt die Umsetzeinrichtung 6 diesen Formenhohlraum 2 im Bereich des Kopfes 5 des Vorspritzlings 3.

In Fig. 1 h ist schließlich dargestellt, daß das Werkzeug mit seinen beiden Werkzeughälften 1,1' geschlossen wird. Dadurch können in der ersten Station neue Vorspritzlinge 3 gespritzt werden, und in der zweiten Station wird die zweite Komponente zur Erstellung der fertigen Zahnbürstenkörper 4 gespritzt. Dabei wird diese zweite Komponente im Bereich des Stieles des Zahnbürstenkörpers 4 angespritzt, während im Bereich des Kopfes 5 keine weitere Komponente vorgesehen ist. Dadurch ist der Zyklus beendet und kann von neuem begonnen werden.

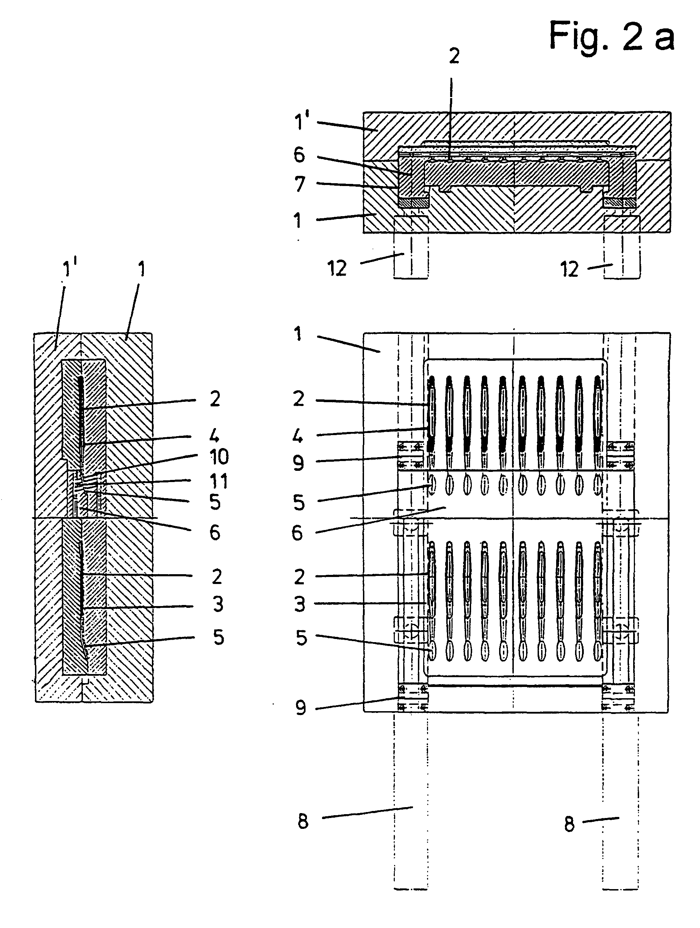

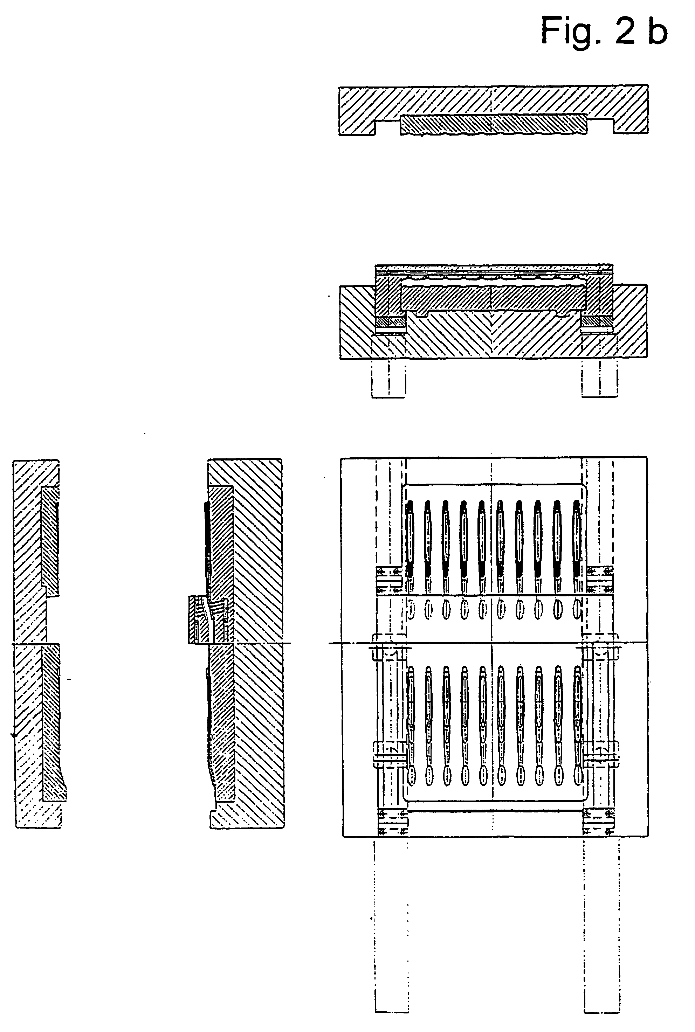

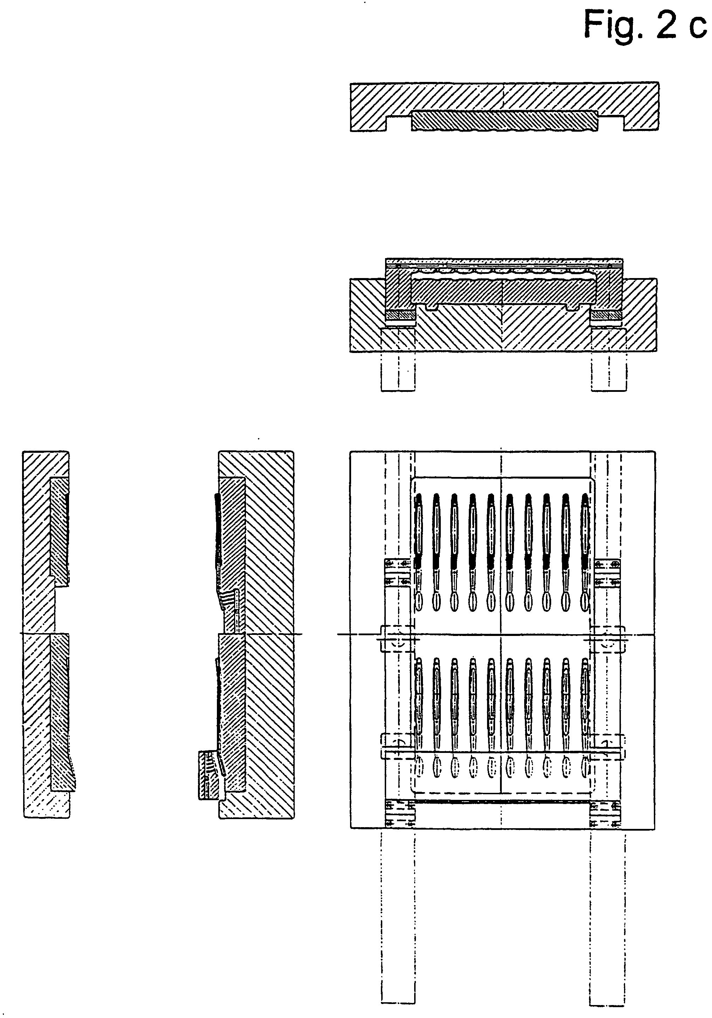

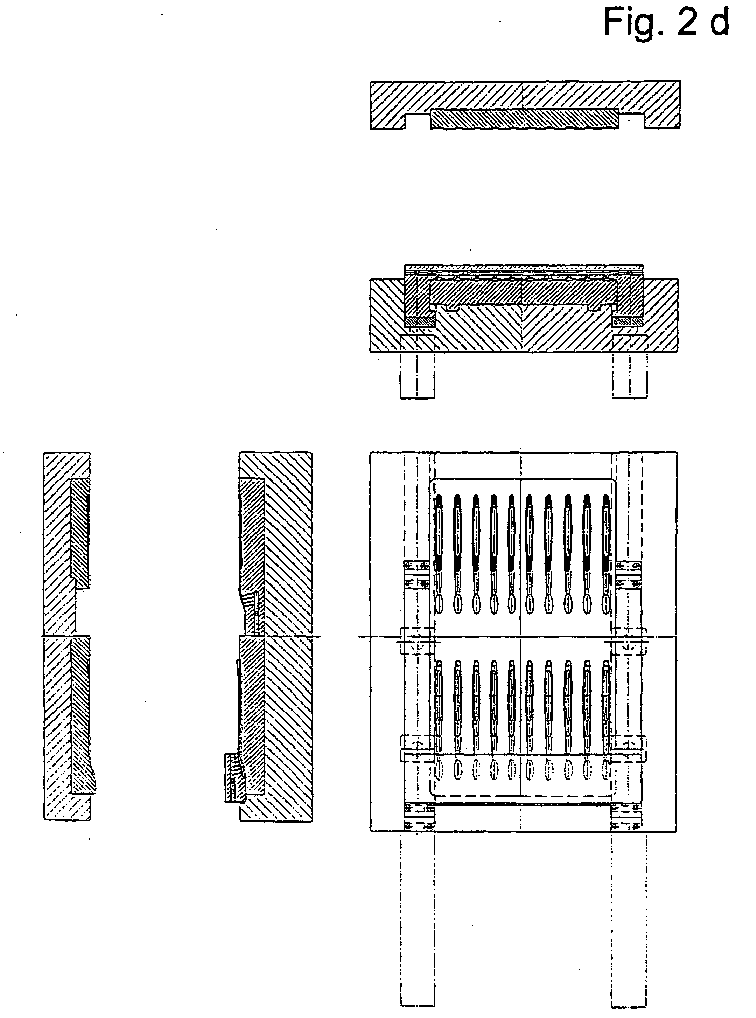

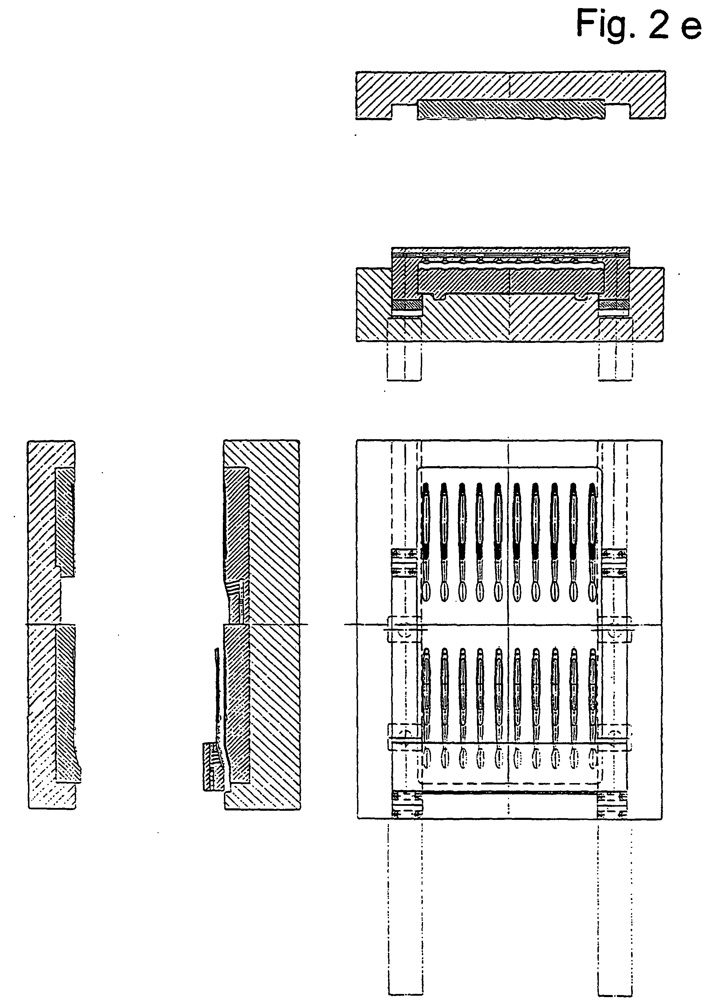

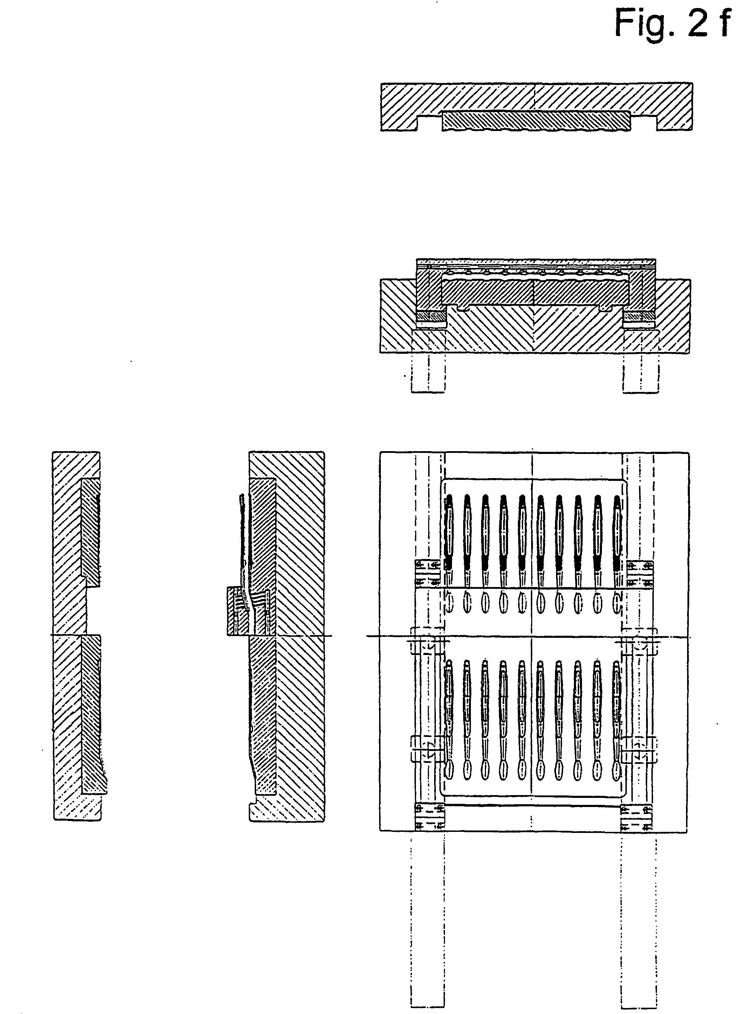

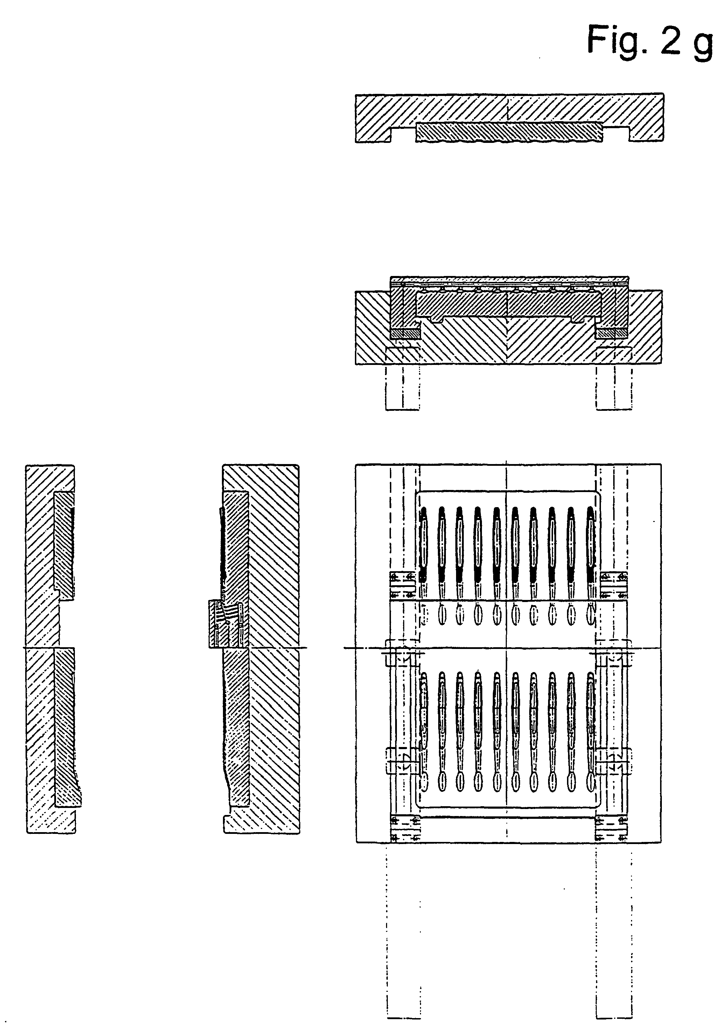

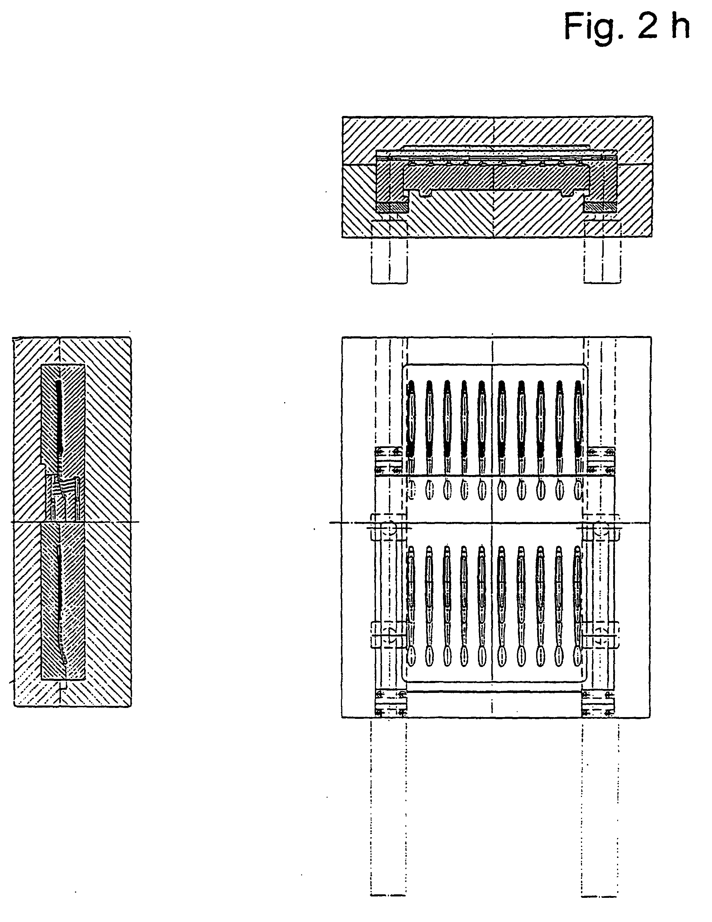

Die zweite Ausführungsvariante der Fig. 2 a bis 2 h zeigt ein Werkzeug, welches vom Grundaufbau und von der Grundkonzeption her ähnlich dem Werkzeug der ersten Variante der Fig. 1 a bis 1 h ist. Der Unterschied besteht darin, daß die Formenhohlräume 2 in Längsrichtung der Verfahrrichtung der Umsetzeinrichtung 6 ausgerichtet sind. Entsprechend ist die Umsetzeinrichtung 6 als eine zu ihrer Verfahrrichtung quer verlaufende Brücke ausgebildet, welche endseitig über L-förmige Führungen 7 in der Werkzeughälfte 1 verfahrbar ist.

Vom Verfahrensablauf her arbeitet dieses Werkzeug entsprechend dem Werkzeug der zuvor beschriebenen, ersten Variante, wobei die in den Zeichnungen dargestellten Verfahrensschritte der Fig. 2 a bis 2 h den Verfahrensschritten der Fig. 1 a bis 1 h entsprechen. Das Grundprinzip besteht darin, daß nach dem Spritzen des Vorspritzlinges 3 die quer verlaufende Umsetzeinrichtung 6 zu diesen Vorspritzlingen 3 verfahren wird (Fig. 2 c bis 2 e), um sie anschließend in die zweite Station zum Spritzen der zweiten Komponente umzusetzen (Fig. 2 f bis 2 h).

### Bezugszeichenliste

- 1, 1': Werkzeughälfte
- 2: Formenhohlraum
- 3: Vorspritzling
- 4: Zahnbürstenkörper
- 5: Kopf
- 6: Umsetzeinrichtung
- 7: Führung
- 8: Pneumatikzylinder
- 9: Festanschlag
- 10: Vakuumsaugnapf
- 11: Vakuumsaugnapf
- 12: pneumatischer Kurzhubzylinder

## Patentansprüche

1. Werkzeug zum Mehrkomponentenspritzgießen von Kunststoff-Zahnbürstenkörpern (4) für Zahnbürsten
mit zwei Werkzeughälften (1,1'), zwischen welchen die Formenhohlräume (2) ausgebildet sind und welche auseinanderfahrbar sowie schließbar sind, sowie
mit einer in der einen Werkzeughälfte (1) integrierten, in dieser versenkbaren sowie abhebbaren sowie längs einer Führung (7) linear verfahrbaren Umsetzeinrichtung (6), mittels welcher die Vorspritzlinge (3) zum Spritzen einer weiteren Komponente in die zugehörigen Formenhohlräume (2) umsetzbar sind,
wobei zum Spritzen der ersten Komponente die Formenhohlräume (2) ausschließlich durch die beiden Werkzeughälften (1,1') gebildet sind,
wobei weiterhin sich die Umsetzeinrichtung (6) im geschlossenen Zustand des Werkzeugs außerhalb des Bereichs zum Spritzen der ersten Komponente befindet und
wobei schließlich die Umsetzeinrichtung (6) nach dem Spritzen der ersten Komponente in den Bereich dieser Vorspritzlinge (3) verfahrbar ist, die Vorspritzlinge (3) dort aufnimmt und sie schließlich in die Formenhohlräume (2) zum Spritzen einer weiteren Komponente transportiert,
**dadurch gekennzeichnet,**
**daß** die die Umsetzeinrichtung (6) aufweisende Werkzeughälfte (1) eine im Querschnitt T- oder L-förmigen Führung (7) für die Umsetzeinrichtung (6) aufweist,
wobei die Umsetzeinrichtung (6) längs des Senkrechtbalkens des "T" oder des "L" von der zugeordneten Werkzeughälfte (1) abhebbar ist und
wobei der Querbalken des 'T' oder des "L" die Hubhöhe des Abhebens der Umsetzeinrichtung (6) begrenzt.

2. Werkzeug nach dem vorhergehenden Anspruch,
**dadurch gekennzeichnet,**
**daß** die Umsetzeinrichtung (6) bezüglich der ihr zugeordneten Werkzeughälfte (1) an der anderen Seite am Vorspritzling (3) angreift.

3. Werkzeug nach einem der vorhergehenden Ansprüche,
**dadurch gekennzeichnet,**
**daß** die Umsetzeinrichtung (6) Vakuumsaugnäpfe (11) zum Aufnehmen des Vorspritzlings (3) aufweist.

4. Werkzeug nach einem der vorhergehenden Ansprüche,
**dadurch gekennzeichnet,**
**daß** die Umsetzeinrichtung (6) die Kavität für die weitere Komponente mit begrenzt.

5. Werkzeug nach einem der vorhergehenden Ansprüche,
**dadurch gekennzeichnet,**
**daß** die eine Werkzeughälfte (1) im Bereich zum Spritzen der weiteren Komponente Vakuumsaugnäpfe (10) zum Ansaugen des Zahnbürstenkörpers (4) aufweist.

6. Werkzeug nach einem der Ansprüche 1 bis 5,
**dadurch gekennzeichnet,**
**daß** die Zahnbürstenkörper (4) quer zur Verfahrrichtung der Umsetzeinrichtung (6) angeordnet sind.

7. Werkzeug nach Anspruch 6,
**dadurch gekennzeichnet,**
**daß** beidseits der Verfahrlinie der Umsetzeinrichtung (6) quer abstehend Zahnbürstenkörper (4) angeordnet sind.

8. Werkzeug nach einem der Ansprüche 1 bis 5,
**dadurch gekennzeichnet,**
**daß** die Zahnbürstenkörper (4) in Verfahrrichtung der Umsetzeinrichtung (6) angeordnet sind.

9. Werkzeug nach einem der vorhergehenden Ansprüche,
**dadurch gekennzeichnet,**
**daß** mehrere Stationen zum Spritzen von mehr als zwei Komponenten durch die Umsetzeinrichtung (6) anfahrbar sind.

## Claims

1. Tool for multi-component injection moulding of plastic toothbrush bodies (4) for toothbrushes,
with two tool halves (1, 1') between which are formed the mould cavities (2) and which can be moved apart and closed, and
with a turning device (6) which can be integrated into the one tool half (1) and lowered into and raised from this and moved linearly along a guide (7), and by means of which the premould (3) can be transferred to the associated mould cavity (2) for moulding of a further component,
where for moulding of the first component the mould cavities (2) are formed exclusively by the two tool halves (1, 1'),
where furthermore the turning device (6) in the closed state of the tool lies outside the area for moulding of the first component, and
where finally after moulding of the first component the turning device (6) can be moved into the area of this premould (3), there pick up the premould (3) and finally transport it into the mould cavity (2) for moulding of a further component,
**characterised in that** the tool half (1) with the turning device (6) has a guide (7) with T- or L-shaped cross-section for the turning device (6),
where the turning device (6) can be raised along the vertical bar of the "T" or "L" from the allocated tool half (1), and
where the cross bar of the "T" or "L" limits the lift height for raising of the turning device (6).

2. Tool according to the previous claim, **characterised in that** the turning device (6), in relation to its allocated tool half (1), acts on the other side of the premould (3).

3. Tool according to any of the previous claims, **characterised in that** the turning device (6) has vacuum suction cups (11) to pick up the premould (3).

4. Tool according to any of the previous claims, **characterised in that** the turning device (6) borders the cavity for the further component.

5. Tool according to any of the previous claims, **characterised in that** the one tool half (1) in the area for moulding the further component has vacuum suction cups (10) for suction-holding of the toothbrush body (4).

6. Tool according to any of claims 1 to 5, **characterised in that** the toothbrush body (4) is arranged transverse to the movement direction of the turning device (6).

7. Tool according to claim 6, **characterised in that** on both sides of the movement line of the turning device (6) are arranged transversely projecting toothbrush bodies (4).

8. Tool according to any of claims 1 to 5, **characterised in that** the toothbrush bodies (4) are arranged in the movement direction of the turning device (6).

9. Tool according to any of the previous claims, **characterised in that** several stations can be approached by the turning device (6) for moulding more than two components.

## Revendications

1. Moule pour le moulage par injection à composants multiples de corps (4) de brosse à dents en matière plastique pour des brosses à dents,
avec deux moitiés de moule (1, 1'), entre lesquelles sont formées les cavités de moulage (2) et qui peuvent être écartées l'une de l'autre ainsi que fermées,
et avec un équipement de transfert (6) intégré dans une première moitié de moule (1), qui peut être enfoncé dans celle-ci et en être soulevé, ainsi qu'être déplacé en translation linéaire le long d'un guide (7), équipement au moyen duquel les pièces pré-moulées (3) peuvent être transférées dans les cavités de moulage associées (2) afin de mouler par injection un autre composant,
selon lequel, pour le moulage par injection du premier composant, les cavités de moulage (2) sont exclusivement formées par les deux moitiés de moule (1, 1'),
selon lequel en outre l'équipement de transfert (6) se trouve, dans l'état fermé du moule, en dehors de la région pour le moulage par injection du premier composant,
et selon lequel enfin l'équipement de transfert (6) peut, à la suite du moulage par injection du premier composant, être déplacé en translation dans la région de ces pièces pré-moulées (3), y prend en charge les pièces pré-moulées (3) et les transporte enfin dans les cavités de moulage (2) pour le moulage par injection d'un autre composant,
**caractérisé en ce que** la moitié de moule (1) présentant l'équipement de transfert (6) présente un guide (7) à section en forme de T ou de L pour l'équipement de transfert (6), l'équipement de transfert (6) pouvant être soulevé de la moitié de moule associée (1) le long de la branche verticale du « T » ou du « L »,
et la branche transversale du « T » ou du « L » délimitant la hauteur de course du soulèvement de l'équipement de transfert (6).

2. Moule selon la revendication précédente, **caractérisé en ce que** l'équipement de transfert (6) agit, par rapport à la moitié de moule (1) qui lui est associée, de l'autre côté sur la pièce pré-moulée (3).

3. Moule selon l'une des revendications précédentes, **caractérisé en ce que** l'équipement de transfert (6) présente des ventouses à vide (11) pour prendre en charge la pièce pré-moulée (3).

4. Moule selon l'une des revendications précédentes, **caractérisé en ce que** l'équipement de transfert (6) délimite conjointement la cavité pour l'autre composant.

5. Moule selon l'une des revendications précédentes, **caractérisé en ce que** la première moitié de moule (1), présente, dans la région pour le moulage par injection de l'autre composant, des ventouses à vide (11) pour aspirer le corps (4) de brosse à dents.

6. Moule selon l'une des revendications 1 à 5, **caractérisé en ce que** les corps (4) de brosse à dents sont disposés transversalement à la direction de translation de l'équipement de transfert (6).

7. Moule selon la revendication 6, **caractérisé en ce que** des corps (4) de brosse à dents faisant transversalement saillie sont disposés de part et d'autre de la ligne de translation de l'équipement de transfert (6).

8. Moule selon l'une des revendications 1 à 5, **caractérisé en ce que** les corps (4) de brosse à dents sont disposés dans la direction de translation de l'équipement de transfert (6).

9. Moule selon l'une des revendications précédentes, **caractérisé en ce que** plusieurs postes peuvent être approchés par l'équipement de transfert (6), afin de mouler par injection plus de deux composants.
